(19)
**Europäisches Patentamt**
**European Patent Office**
**Office européen des brevets**

(11) **EP 4 693 607 A1**

(12) # EUROPEAN PATENT APPLICATION
published in accordance with Art. 153(4) EPC

(43) Date of publication:
**11.02.2026 Bulletin 2026/07**

(21) Application number: **23943447.5**

(22) Date of filing: **21.12.2023**

(51) International Patent Classification (IPC):
**H01M 10/613** $^{(2014.01)}$     **H01M 10/647** $^{(2014.01)}$
**H01M 10/653** $^{(2014.01)}$

(52) Cooperative Patent Classification (CPC):
Y02E 60/10

(86) International application number:
**PCT/CN2023/140514**

(87) International publication number:
**WO 2025/000974 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.06.2023  CN 202310766571**

(71) Applicant: **Sunwoda Mobility Energy Technology
Co., Ltd.
Shenzhen, Guangdong 518107 (CN)**

(72) Inventors:
• **ZHANG, Meng**
  **Shenzhen, Guangdong 518107 (CN)**
• **YANG, Wei**
  **Shenzhen, Guangdong 518107 (CN)**
• **HU, Mingjiang**
  **Shenzhen, Guangdong 518107 (CN)**
• **YUAN, Cheng**
  **Shenzhen, Guangdong 518107 (CN)**

(74) Representative: **Elzaburu S.L.P.
Edificio Torre de Cristal
Paseo de la Castellana 259 C, planta 28
28046 Madrid (ES)**

(54) **BATTERY PACK AND ELECTRICAL DEVICE**

(57)     The present application belongs to the technical field of battery cells and provides a battery cell pack and an electrical device. **In** the battery cell pack, an insulating film is provided with an opening region which exposes a corresponding portion of an outer wall of a battery cell. A heat dissipation component is provided in the opening region and is arranged between the outer wall and an inner wall of a frame, so that heat of the battery can be dissipated outwards from the opening region and the heat dissipation component, thereby effectively reducing the thermal runaway risk of the battery cell. Moreover, the heat dissipation component spaces the outer wall of the battery from the inner wall of the frame, effectively avoiding insulation failure. **In** addition, because an area S of the opening region of the insulating film, a thickness H of the insulating film and a volume V of the battery cell satisfy $0.0001 \leq S \times H/V \leq 0.5$, a space of the opening of the insulating film can meet the heat dissipation requirement of the battery cell, thereby improving the heat dissipation efficiency of the battery cell and ensuring the safety of the battery cell pack.

FIG. 1

EP 4 693 607 A1

## Description

This application claims priority to Chinese Patent Application No. 202310766571.5, filed with Chinese National Intellectual Property Administration on June 26, 2023, and entitled "BATTERY CELL PACK AND ELECTRICAL DEVICE". The afore-mentioned application is hereby incorporated by reference in its entirety.

## TECHNICAL FIELD

The present application belongs to the technical field of battery cells, and specifically relates to a battery cell pack and an electrical device.

## BACKGROUND

The Cell to Pack (CTP) technology for battery cells enhances space utilization by reducing or eliminating module structures and arranging battery cells directly inside a pack. Generally, a housing of a battery cell is made of metal, and an insulating film is typically wrapped around the periphery of the battery cell to prevent short circuit caused by a contact between the housing and the pack or other components. The insulating film improves electrical insulation of the battery cell, but its poor thermal conductivity hampers heat dissipation of the battery cell, increasing the risk of thermal runaway of the battery cell.

## SUMMARY

Embodiments of the present application provide a battery cell pack, aiming to overcome the technical problem that the insulating film of the battery cell in the existing battery cell pack has poor thermal conductivity, is not conducive to the heat dissipation of the battery cell, and is prone to thermal runaway. Another purpose of embodiments of the present application is to provide an electrical device.

In a first aspect, a battery cell pack according to an embodiment of the present application includes:

a frame having a plurality of inner walls, where the plurality of inner walls enclose an accommodation space;
a battery cell disposed within the accommodation space, where the battery has a plurality of outer walls;
an insulating film wrapping the plurality of outer walls, where the insulating film being provided with an opening region opposite to the outer wall, the opening region being configured to expose at least a portion of the outer wall from the insulating film; and
a heat dissipation component, at least a portion of which is disposed within the opening region and located between the outer wall and the inner wall;
where an area of the opening region is $S$ mm$^2$, a thickness of the insulating film is $H$ mm, a volume of the battery cell is $V$ mm$^3$, and the battery cell pack satisfies the following relationship: $0.0001 \leq S \times H/V \leq 0.5$.

In some embodiments, the battery cell pack satisfies the following relationship: $0.001 \leq S \times H/V \leq 0.2$.

In some embodiments, the heat dissipation component is in contact with the inner wall, a volume of the heat dissipation component is $V_1$ mm$^3$, and the battery cell pack satisfies the following relationship: $V_1/(S \times H) \geq 1$.

In some embodiments, the outer wall is rectangular, a length of the outer wall is $L$ mm, a width of the outer wall is $M$ mm, a maximum dimension of the opening region along a length direction of the outer wall opposite to the opening region is $L_1$ mm, and a maximum dimension of the opening region along a width direction of the outer wall opposite to the opening region is $M_1$ mm, and the battery cell pack satisfies the following relationship: $0.01 \leq L_i/L < 1$; and/or, $0.01 \leq M_1/M < 1$.

In some embodiments, the battery cell pack satisfies the following relationship: $L_1/L \geq 0.5$; and/or, $M_1/M \geq 0.5$.

In some embodiments, a thickness of the heat dissipation component is $H_1$ mm, and the battery cell pack satisfies the following relationship: $H_1/H > 1$.

In some embodiments, the plurality of outer walls include a top wall, a bottom wall, and a plurality of side walls connected between the top wall and the bottom wall; and

a portion of the insulating film wrapping the bottom wall is provided with the opening region, and/or a portion of the insulating film wrapping the side wall is provided with the opening region.

In some embodiments, the insulating film is provided with a plurality of said opening regions;

the plurality of opening regions include a first opening region and a second opening region arranged on the portion of the insulating film wrapping the bottom wall, and/or the plurality of opening regions include a third opening region and a fourth opening region arranged on the portion of the insulating film wrapping the side wall.

In some embodiments, the insulating film is provided with a plurality of said opening regions;

the plurality of opening regions include a first opening region and a second opening region provided on the portion of the insulating film wrapping the bottom wall, each of the first opening region and the second opening region being configured to expose a portion of the bottom wall from the insulating film; the heat dissipation component includes a first heat dissipation component and a second heat dissipation component, the first heat dissipation component is disposed within the first opening region, the second heat dissipation component is disposed within the second opening region, and the first heat dissipation component and the second heat dissipation component are disposed between the bottom wall and the inner wall;

and/or, the plurality of opening regions include a third opening region and a fourth opening region provided on the portion of the insulating film wrapping the side wall, each of the third opening region and the fourth opening region being configured to expose a portion of the side wall from the insulating film; the heat dissipation component includes a third heat dissipation component and a fourth heat dissipation component, the third heat dissipation component is disposed within the third opening region, the fourth heat dissipation component is disposed within the fourth opening region, the third heat dissipation component and the fourth heat dissipation component are disposed between the side wall and the inner wall.

In some embodiments, the frame includes a liquid cooling plate disposed opposite to the bottom wall and/or the side wall, the plurality of inner walls include a liquid cooling surface of the liquid cooling plate facing the battery cell, and the heat dissipation component is connected between the outer wall and the liquid cooling surface.

In some embodiments, the plurality of side walls include a first side wall and a second side wall disposed opposite to each other; and

a portion of the insulating film wrapping the first side wall and a portion of the insulating film wrapping the second side wall are provided with the opening region respectively.

In some embodiments, a material of the heat dissipation component is one or more of a phase change material, a thermally conductive adhesive, and a thermally conductive graphite sheet.

In a second aspect, an electrical device described in an embodiment of the present application includes a battery cell pack described in any of the above embodiments.

Beneficial Effects

A battery cell pack provided by embodiments of the present application is provided with an opening region on its insulating film, through which a corresponding portion of an outer wall of a battery cell is exposed; a heat dissipation component is provided within the opening region, and the heat dissipation component is arranged between the outer wall and an inner wall of a frame, so that the heat of the battery cell can be dissipated outward from the opening region and the heat dissipation component, thereby effectively reducing the risk of thermal runaway of the battery cell; at the same time, the heat dissipation component separates the outer wall of the battery and the inner wall of the frame, thereby effectively avoiding insulation failure; in addition, since an area S of the opening region of the insulating film and a thickness H of the insulating film and a volume V of the battery satisfy $0.0001 \leq S \times H / V \leq 0.5$, the space of the opening region of the insulating film can meet the heat dissipation requirements of the battery cell, thereby improving the heat dissipation efficiency of the battery cell and ensuring the safety of the battery cell pack.

The electrical device of the embodiments of the present application may include all the technical features and beneficial effects of the above-mentioned battery cell pack, which will not be repeated here.

**BRIEF DESCRIPTION OF DRAWINGS**

In order to more clearly illustrate the technical solutions in embodiments of the present application, the drawings used in the description of the embodiments will be briefly introduced below. Obviously, the drawings described below are only some embodiments of the present application. For those skilled in the art, other drawings can be obtained based on these drawings without creative work.

FIG. 1 is a schematic diagram of a three-dimensional structure of a battery cell pack provided by an embodiment of the present application.

FIG. 2 is a schematic cross-sectional view of the battery cell pack along line A-A in FIG. 1.

FIG. 3 is a schematic diagram of a partial enlarged structure of a region B in FIG. 2.

FIG. 4 is a schematic diagram of a three-dimensional structure of a battery cell wrapped with an insulating film in a battery cell pack according to an embodiment of the present application.

FIG. 5 is a schematic structural diagram of the battery cell in FIG. 4 viewed along an X direction.

FIG. 6 is a schematic structural diagram of the battery cell in FIG. 4 viewed along a Z direction.

FIG. 7 is a schematic diagram of a three-dimensional structure of an insulating portion provided by an embodiment of the present application.

FIG. 8 is a schematic diagram of a partially enlarged cross-sectional structure of a battery cell pack in some embodiments of the present application.

Reference numerals:

100- frame; 110- liquid cooling plate; 120- side plate; 130- end plate; 111- liquid cooling surface; 200- battery cell; 210- outer wall; 211- side wall; 212- bottom wall; 300- insulation film; 400- opening region; 500- heat dissipation component.

**DESCRIPTION OF EMBODIMENTS**

The technical solutions provided by embodiments of the present application will be described clearly and completely below with reference to accompanying drawings of the embodiments of the present application. Obviously, the described embodiments are only part of the embodiments of the present application, rather than all of the embodiments. Based on the embodiments in the present application, all other embodiments obtained by those skilled in the art without creative work are within the scope of protection of the present application.

In the description of the present application, it should be understood that the terms "length", "width", "thickness", "upper", "lower", "top", "bottom", "inside", "outside", etc., indicating the orientation or positional relationship, are based on the orientation or positional relationship shown in the drawings, and are only for facilitating the description of the present application and simplifying the description, rather than indicating or implying that the apparatus or element referred to must have a specific orientation, be constructed and operated in a specific orientation, and therefore cannot be understood as a limitation on the present application. In the description of the present application, "a plurality of" refers to two or more, and "at least one" may refer to one or two or more, unless otherwise clearly and specifically defined.

The applicant has noticed that in existing battery cell packs, the insulating film wrapping the outer periphery of battery cells will affect the heat dissipation of the battery cells, making the battery cells susceptible to thermal runaway.

In view of this, an embodiment of the present application provides a battery cell pack, which reduces the effect of an insulating film on the heat dissipation of the battery cell.

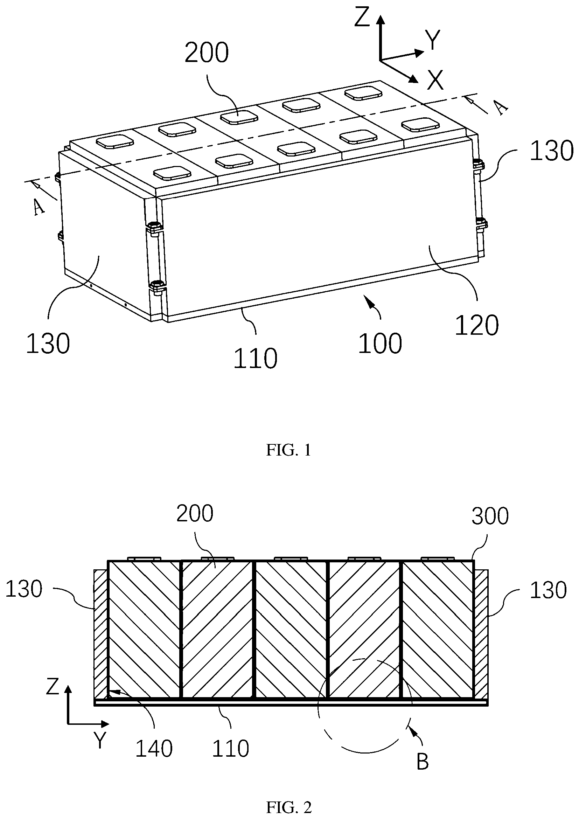

Please refer to FIG. 1 and FIG. 2, where FIG. 1 illustrates a three-dimensional structure of a battery cell pack provided by an embodiment of the present application, and FIG. 2 illustrates a cross-sectional structure of the battery cell pack along line A-A in FIG. 1. In an embodiment of the present application, a battery cell pack includes a frame 100, a battery cell 200, and an insulating film 300 wrapping the battery cell 200. A plurality of inner walls 140 of the frame 100 enclose an accommodation space for accommodating the battery cell 200. One or more battery cells 200 are arranged in the accommodation space, and the insulating film 300 wraps an outer wall 210 of the battery cell 200.

Specifically, in some embodiments, the frame 100 may be an entire outer case of the battery cell pack, and the battery cells 200 are contained in the accommodation space enclosed by the plurality of inner walls 140 of the case. In some embodiments, the frame 100 may also be a combination of part of the structure of the case of the battery cell pack and other structures of the battery cell pack. For example, the frame 100 may be enclosed by an end plate 130, a side plate 120 of the case and a liquid cooling plate 110 at a bottom portion; or, it may be enclosed by a crossbeam provided inside the case (not shown in the drawings) and the liquid cooling plate 110, etc. It is understandable that in the embodiment of the present application, the frame 100 is a structure composed of a plurality of components which are arranged around the periphery of one or more battery cells 200 and opposite to the outer walls 210 of the battery cells 200, and a surface of each of the components facing towards the battery cell 200 is the inner wall 140 of the frame 100.

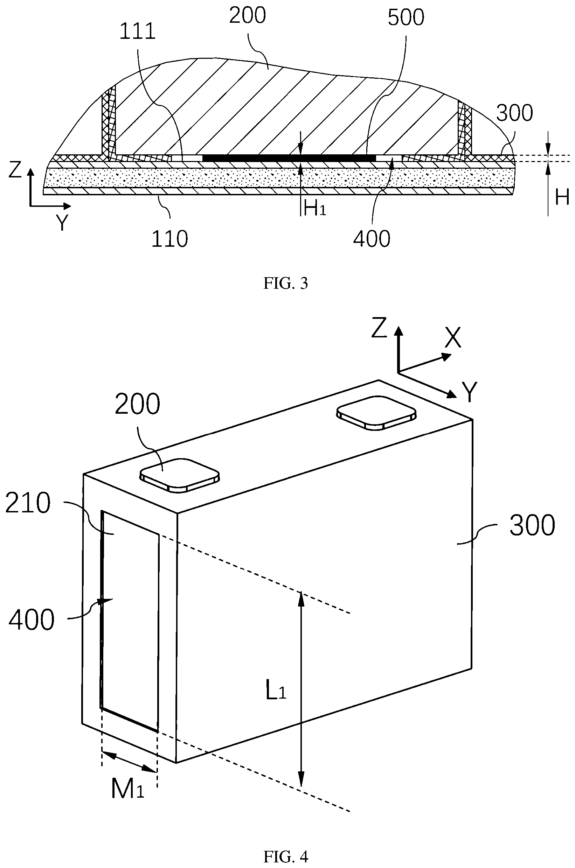

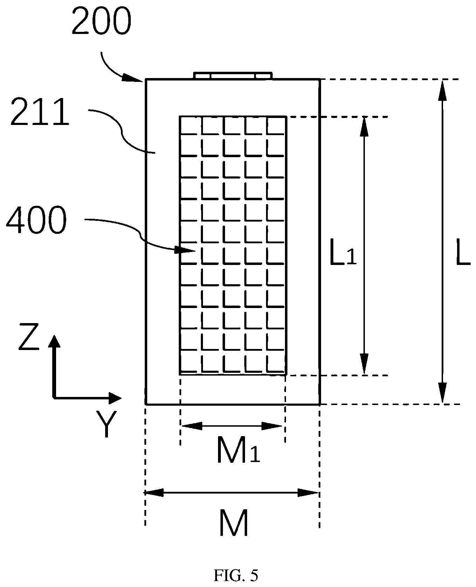

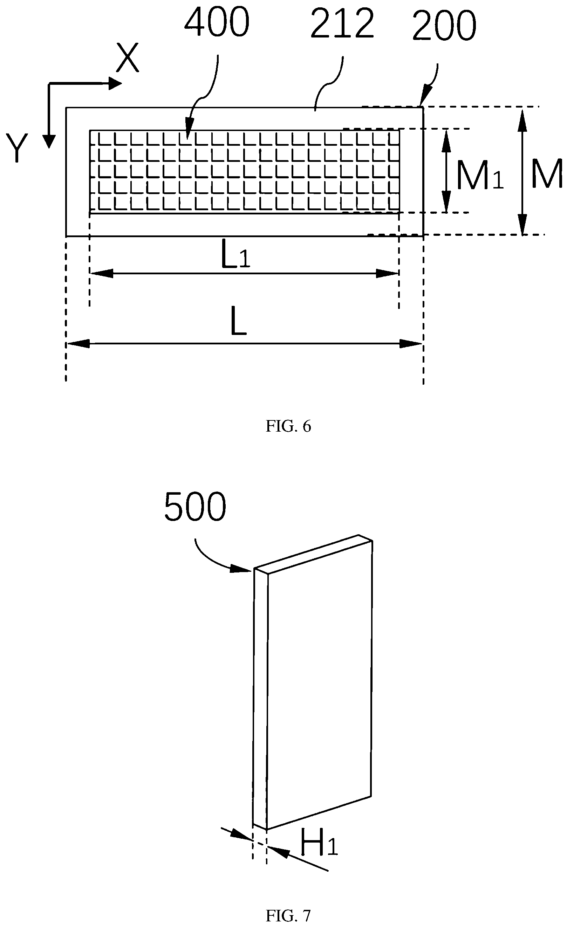

Please refer to FIG. 3, FIG. 4, FIG. 5 and FIG. 6, where FIG. 3 illustrates a partial enlarged structure of a region B in FIG. 2, FIG. 4 illustrates a three-dimensional structure of a battery cell 200 wrapped with an insulating film 300, FIG. 5 illustrates a structure of the battery cell 200 in FIG. 4 observed along an X direction, and FIG. 6 illustrates a structure of the battery cell in FIG. 4 observed along a Z direction. FIG. 5 and FIG. 6 do not show the insulating film 300, and schematically show a shape of an opening region 400 on a corresponding outer wall 210 of the battery cell 200. In an embodiment of the present application, the insulating film 300 is provided with at least one opening region 400 opposite to any one of the outer walls 210 of the battery cell 200, and the opening region 400 is used to expose a corresponding portion of the outer wall 210 from the insulating film 300. That is, one or more opening regions 400 are provided on the insulating film 300, and the opening region 400 is arranged on a portion of the insulating film 300 opposite to any one of the outer walls 210 of the battery cell 200 (that is, a portion of the insulating film 300 attached to the outer wall 210), and the corresponding portion of the outer wall 210 can be exposed from the insulating film 300 through the opening region 400. In addition, the battery cell pack is further provided with a heat dissipation component 500, and the heat dissipation component 500 is at least partially arranged in the opening region 400, and is arranged between the outer wall 210 and the inner wall 140.

It should be noted that, in some embodiments, only one opening region 400 may be provided on the insulating film 300, and the opening region 400 may be provided corresponding to a certain outer wall 210 of the battery cell 200, so that a corresponding portion of the outer wall 210 is exposed. In some embodiments, a plurality of opening regions 400 may be provided on the insulating film 300, and each opening region 400 corresponds to one outer wall 210 of the battery cell 200, so that corresponding portions of outer walls 210 are exposed from the insulating film 300. In some embodiments, a plurality of opening regions 400 may be provided on the insulating film 300, the plurality of opening regions 400 correspond to the plurality of outer walls 210 of the battery cell 200, one or more opening regions 400 are provided corresponding to one outer wall 210, and the opening region 400 exposes the corresponding portion of the outer wall 210 from the insulating film 300. In some embodiments, a plurality of opening regions 400 may be provided on the insulating film 300, each opening region 400 corresponds to one outer wall 210 of the battery cell 200, and opening regions 400 respectively corresponding to two adjacent outer walls 210 are connected. Correspondingly, the heat dissipation component 500 is disposed corresponding to the opening region 400, and the heat dissipation component 500 is provided within each opening region 400.

In a battery cell pack provided by an embodiment of the present application, an area of the opening region 400 is S $mm^2$, a thickness of the insulating film 300 is H mm, a volume of the battery cell 200 is V $mm^3$, and the battery cell pack satisfies the following relationship: $0.0001 \leq S \times H/V \leq 0.5$.

By forming the opening region 400 on the insulating film 300 to expose the outer wall 210 of the battery cell 200, the blocking effect of the insulating film 300 on the heat dissipation of the battery cell 200 can be reduced. The opening region 400 provides a space for the battery cell 200 to dissipate heat outward, so that the heat generated by the battery cell 200 can be dissipated outward from the opening region 400 opposite to the outer wall 210. By setting the area S of the opening region 400 of the insulating film 300, the thickness H of the insulating film, and the volume V of the battery to meet the above relationship, the space of the opening region 400 of the insulating film 300 can meet a heat dissipation requirement of the battery cell 200, which improves the heat dissipation efficiency of the battery cell 200 and ensures the safety of the battery cell pack. In addition, the heat dissipation component 500 is used to guide the heat of the battery cell 200 dissipated from its outer wall 210 to the opening region 400, effectively reducing the risk of thermal runaway of the battery cell 200. Meanwhile, the heat dissipation component 500 spaces the outer wall 210 of the battery cell 200 and the inner wall 140 of the frame 100, which can also effectively avoid insulation failure caused by setting the opening region 400.

It should be noted that, in an embodiment of the present application, a value of $S \times H/V$ is in a range of 0.0001 to 0.5, that is, the value can be any value selected from 0.0001, 0.0005, 0.001, 0.005, 0.01, 0.02, 0.03, 0.04, 0.05, 0.06, 0.07, 0.08, 0.09, 0.1, 0.2, 0.3, 0.4, 0.5, or a value in a range between any two values thereof. For the battery cell 200, when the value of $S \times H/V$ is larger, its heat dissipation space is larger, which is more conducive to the heat dissipation of the battery cell 200; and when $S \times H/V > 0.5$, it means that the opening region 400 on the insulating film 300 is relatively too large, which may affect the insulation performance of the battery cell 200. Therefore, in the embodiment of the present application, $S \times H/V \leq 0.5$ is maintained. For the battery cell 200, when the value of $S \times H/V$ is smaller, its heat dissipation space is smaller, the heat dissipation effect is relatively reduced, and at the same time, the insulation performance of the battery cell 200 is better; and when $S \times H/V < 0.0001$, the heat dissipation space of the battery cell 200 is too small, and the opening region 400 and the heat dissipation component 500 do not improve the heat dissipation performance of the battery cell 200 too much. Therefore, in the embodiment of the present application, $S \times H/V \geq 0.0001$ is maintained. Optionally, $0.001 \leq S \times H/V \leq 0.2$ is maintained, so as to ensure the balance between the heat dissipation effect and the insulation effect and to ensure the safety of the battery cell pack.

It should also be noted that in the above relationship, the area S of the opening region 400 refers to a total area of one or more opening regions 400 corresponding to any outer wall 210, that is, a total area S of all opening regions 400 corresponding to one outer wall 210 of the battery cell 200. The area S of the opening region 400 can be measured and calculated by a conventional area measurement method. For example, if the opening region 400 is in a regular shape (such as a square, a circle, an ellipse, a ring, etc.), the area measurement method of the corresponding shape can be used for measurement and calculation. If the opening region 400 is in an irregular shape, a coating method can be used for measurement and calculation, that is, a coating with uniform mass is attached to a corresponding portion of the outer wall 210 corresponding to the opening region 400, then the coating attached to the corresponding portion is removed and a mass of the coating is determined, so that a quotient of the mass of the removed coating and a predetermined mass per unit area of the coating is determined as the area S of the measured opening region 400.

Optionally, the area of the opening region 400 satisfies: 1000 $mm^2 \leq S \leq 500000$ $mm^2$; the thickness of the insulating film 300 satisfies: 0.06 mm$\leq H \leq 0.12$ mm; and the volume of the battery cell 200 satisfies: 110000 $mm^3 \leq V \leq 5550000$ $mm^3$.

The thickness H of the insulating film 300 can be measured by using measuring tools such as a vernier caliper and a micrometer; the volume V of the battery cell 200 can be calculated by measuring the length, width, and height of the battery cell 200.

Further, in some embodiments, the heat dissipation component 500 is in contact with the inner wall 140, the volume of the heat dissipation component 500 is $V_1$ $mm^3$, and the battery cell pack satisfies the following relationship: $V_1/(S \times H) \geq 1$.

That is to say, in this embodiment, $V_1$ changes with the change of $S \times H$, and the relationship between $V_1$ and $S \times H$

is $V_1 \geq (S \times H)$. Thus, the volume of the heat dissipation component 500 is greater than or equal to the volume of the corresponding opening region 400, so that the heat dissipation component 500 is flush with the insulating film 300 or protrudes outside the insulating film 300, and then contacts the inner wall 140 of the frame 100 to directly conduct the heat generated by the battery cell 200 to the frame 100, and so that the frame 100 takes away the heat generated by the battery cell 200.

The volume of the heat dissipation component 500 can be specifically measured according to the actual structure of the heat dissipation component 500. For example, when the heat dissipation component 500 is in a regular shape such as a cylinder or a cuboid, the geometric dimensions of the heat dissipation component 500 can be measured, and then the volume $V_1$ mm$^3$ of the heat dissipation component 500 can be calculated. When the heat dissipation component 500 is in an irregular shape, for example, the heat dissipation component 500 is formed by solidifying a thermally conductive gel, it can be melted by heating, and then placed in a regular container and re-solidified for measurement. Or, for the heat dissipation component 500 that is in an irregular shape and cannot be melted, a drainage method or other known measurement methods can be used for measurement. Those skilled in the art can choose the measurement method according to actual conditions.

Please refer to FIG. 4, FIG. 5 and FIG. 6 again. In some embodiments, the battery cell 200 is a square battery cell, and the outer wall 210 of the battery cell 200 is rectangular. Specifically, the outer wall 210 of the battery cell 200 can be rectangular or square. The length of the outer wall 210 is L mm, the width of the outer wall 210 is M mm, a maximum dimension of the opening region 400 in a length direction of the outer wall 210 is $L_1$ mm, and a maximum dimension of the opening region 400 in a width direction of the outer wall 210 is $M_1$ mm. The battery cell pack satisfies the following relationship: $0.01 \leq L_i/L < 1$; and/or, $0.01 \leq M_1/M < 1$.

That is to say, $L_1/L$ can be any value in a range of greater than or equal to 0.01 and less than 1. For example, $L_1/L$ can be any value selected from 0.01, 0.02, 0.03, 0.04, 0.05, 0.06, 0.07, 0.08, 0.09, 0.1, 0.2, 0.3, 0.4, 0.5, 0.6, 0.7, 0.8, 0.9, 0.98, or a value in a range between any two values thereof. Within this range, the smaller $L_1/L$, the smaller the proportion of the opening region 400 relative to the corresponding outer wall 210 in the length direction, so that the space for heat dissipation will be relatively smaller and the risk of insulation failure will also be reduced accordingly. The larger $L_1/L$, the larger the proportion of the opening region 400 relative to the corresponding outer wall 210 in the length direction, so that the space for heat dissipation will be relatively larger. In order to avoid too small heat dissipation space, $L_1/L$ should be greater than 0.01. In addition, due to a dimension limitation of the outer wall 210 and to ensure the insulation effect, $L_1/L < 1$ should be satisfied. Optionally, $L_1/L \geq 0.5$ can ensure sufficient heat dissipation space.

Correspondingly, $M_1/M$ can be any value in a range of greater than or equal to 0.01 and less than 1. For example, $M_1/M$ can be any value selected from 0.01, 0.02, 0.03, 0.04, 0.05, 0.06, 0.07, 0.08, 0.09, 0.1, 0.2, 0.3, 0.4, 0.5, 0.6, 0.7, 0.8, 0.9, 1, or a value in a range between any two values thereof. Within this range, the smaller $M_1/M$, the smaller the proportion of the opening region 400 relative to the corresponding outer wall 210 in the width direction, so that the space for heat dissipation will be relatively smaller and the risk of insulation failure will also be reduced accordingly. The larger $M_1/M$, the larger the proportion of the opening region 400 relative to the corresponding outer wall 210 in the width direction, so that the space for heat dissipation will be relatively larger. In order to avoid too small heat dissipation space, $M_1/M$ should be greater than 0.01. In addition, due to a dimension limitation of the outer wall 210, $M_1/M < 1$ should be satisfied. Optionally, $M_1/M \geq 0.5$ can ensure sufficient heat dissipation space.

It should be noted that, in the description of the present application, generally speaking, a side with a larger dimension in the outer wall 210 of the battery cell 200 is defined as the length of the outer wall 210, and a side with a smaller dimension is defined as the width of the outer wall 210. In some embodiments, for the outer wall 210 with equal side dimensions, any side can be defined as the length, and the side perpendicular thereto is defined as the width.

Specifically, please refer to FIG. 5. For the side wall 211 of the battery cell 200, a length in a Z direction is L mm, and a length direction of the side wall 211 is the Z direction. That is to say, in the Z direction, a maximum dimension of the opening region 400 corresponding to the side wall 211 is $L_1$ mm; a width of the side wall 211 in a Y direction is M, and a width direction of the side wall 211 is the Y direction. That is to say, in the Y direction, a maximum dimension of the opening region 400 corresponding to the side wall 211 is $M_1$ mm. Please refer to FIG. 6, for a bottom wall 212 of the battery cell 200, a length in a X direction is L mm, and a length direction of the bottom wall 212 is the X direction. That is, in the X direction, a maximum dimension of the opening region 400 corresponding to the bottom wall 212 is $L_1$ mm; a width of the bottom wall 212 in the Y direction is M, and a width direction of the bottom wall 212 is the Y direction. That is, in the Y direction, a maximum dimension of the opening region 400 corresponding to the bottom wall 212 is $M_1$ mm. L, $L_1$, $M_1$ and M can all be measured by measuring tools such as a vernier caliper or a micrometer.

Optionally, the outer wall 210 is a rectangle, and its length satisfies: $100 \text{ mm} \leq L \leq 1000 \text{ mm}$; the width of the outer wall 210 satisfies: $10 \text{ mm} \leq M \leq 500 \text{ mm}$.

Further, please refer to FIG. 7, which illustrates a three-dimensional structure of a heat dissipation component 500 in an embodiment of the present application. In some embodiments, when an area of an orthographic projection of a heat dissipation component 500 onto a corresponding outer wall 210 is less than or equal to an area of an orthographic projection of an opening region 400 onto the corresponding outer wall 210, the thickness of the heat dissipation component

500 is $H_1$ mm, and the battery cell pack satisfies the following relationship: $H_1/H>1$. The heat dissipation component 500 is flush with the insulating film 300 or protrudes outside the insulating film 300, and then contacts the inner wall 140 of the frame 100, and can directly conduct the heat emitted by the battery cell 200 to the frame 100, so that the heat emitted by the battery cell 200 is taken away through the frame 100. $H_1$ can be measured by measuring tools such as a vernier caliper or a micrometer. It can be understood that in this embodiment, the thickness of the heat dissipation component 500 is determined according to the thickness of the insulating film 300, and $H_1 \geq H$.

Furthermore, $H_1 \leq 2mm$, $1 \leq H/H \leq 10/3$, so that the heat dissipation of the heat dissipation component 500 is more uniform. Optionally, $50/9 \leq H_1/H \leq 25/5$, so that the thermal conductivity and insulation properties of the battery cell pack are in a better state, and the cooling effect is obvious.

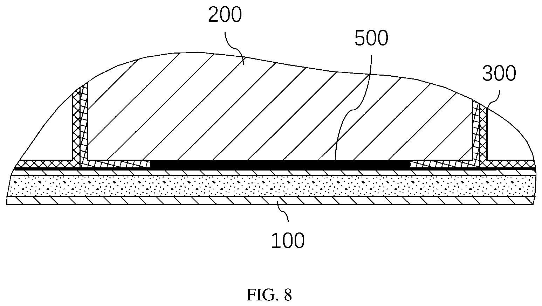

Referring to FIG. 8, it should be noted that: in some embodiments, when the heat dissipation component 500 is a thermally conductive gel, and during the coating process, the thermally conductive gel may overflow from the opening region 400. At this time, a coating area of the heat dissipation component 500 may be larger than an area of the opening region 400, and may even be larger than an area of the corresponding outer wall 210 (see FIG. 8). In such circumstance, the thickness of the heat dissipation component 500 is greater than the thickness of the insulating film 300, and the thickness of the heat dissipation component 500 is a thickness of a portion of the heat dissipation component 500 whose orthographic projection is within the opening region 400.

Please refer to FIG. 4, FIG. 5 and FIG. 6 again. In an embodiment of the present application, the plurality of outer walls 210 of the battery cell 200 include a top wall, a bottom wall 212 and a plurality of side walls 211 connected between the top wall and the bottom wall 212. A portion of the insulating film 300 wrapping the bottom wall 212 and/or the side wall 211 is provided with an opening region 400. The top wall is an outer wall of the battery cell 200 where a terminal is arranged. The top wall can be integrally formed with the side walls 211, or it can be separately arranged and covered on a battery housing formed by connecting the bottom wall 212 and the side walls 211. In an embodiment of the present application, the opening region 400 can be opened in a portion of the insulating film 300 opposite to the bottom wall 212 of the battery cell 200, and can also be opened in a portion of the insulating film 300 opposite to the side wall 211 of the battery cell 200. When the insulating film 300 is provided with a plurality of opening regions 400, the opening regions 400 may be provided on a portion of the insulating film 300 corresponding to the bottom wall 212 and a portion of the insulating film 300 corresponding to the side wall 211; or, the opening regions 400 may be provided only on corresponding portions of the plurality of side walls 211. It can be understood that in the description of the present application, the plurality of side walls 211 include two large faces (largest faces of a square battery cell) and two side faces (faces connected to the large faces) of the square battery cell.

Further, in some embodiments, the insulating film 300 is provided with a plurality of opening regions 400, the plurality of opening regions 400 include a first opening region and a second opening region provided on a portion of the insulating film 300 wrapping the bottom wall 212, and/or the plurality of opening regions 400 include a third opening region and a fourth opening region provided on a portion of the insulating film 300 wrapping the side wall 211. That is to say, at least two opening regions 400 can be opened on the portion of the insulating film 300 wrapping the bottom wall 212, which are the first opening region and the second opening region, and the shapes of the first opening region and the second opening region can be the same or different; at least two opening regions 400 can also be opened on the portion of the insulating film 300 wrapping any side wall 211, which are the third opening region and the fourth opening region, and the shapes of the third opening region and the fourth opening region can be the same or different; or, according to needs, the first opening region and the second opening region are provided on the portion of the insulating film 300 wrapping the bottom wall 212, the third opening region and the fourth opening region are provided on the portion of the insulating film 300 wrapping the side wall 211, and the shapes of the first opening region, the second opening region, the third opening region and the fourth opening region can be the same or different; the above solutions can be specifically selected according to actual needs.

In some embodiments, the plurality of side walls 211 of the battery cell include a first side wall and a second side wall that are arranged opposite to each other; portions of the insulating film 300 wrapping the first side wall and the second side wall are respectively provided with an opening region 400. The bottom wall 212 of the battery cell 200 is also provided with an opening region 400. By providing the opening region 400 on the three outer walls 210, the heat dissipation efficiency of the battery cell 200 is further improved, and the safety of the battery cell pack is ensured.

Further, please refer to FIG. 1, FIG. 2 and FIG. 3 again, the frame 100 includes a liquid cooling plate 110 arranged opposite to the bottom wall 212 and/or the side wall 211, the plurality of inner walls 140 include a liquid cooling surface 111 of the liquid cooling plate 110 arranged toward the battery cell 200, and the heat dissipation component 500 is connected between the outer wall 210 and the liquid cooling surface 111. Thus, the heat generated by the battery cell 200 is introduced to the liquid cooling surface 111 through the heat dissipation component 500 correspondingly arranged in the opening region 400, and is taken away by the liquid cooling plate 110, thereby improving the cooling efficiency and further ensuring the safety of the battery cell pack.

In some embodiments, the shape of the heat dissipation component 500 includes at least one of a square, a circle, and a ring; and/or, a material of the heat dissipation component 500 includes at least one of a phase change material, a thermally conductive adhesive, and a thermal conductive graphite sheet. In other words, the shape of the heat dissipation component 500 can be one of a square, a circle, and a ring, or when a plurality of opening regions 400 are provided, the shapes of the heat dissipation components 500 provided in different opening regions 400 can be a combination of various shapes selected from a square, a circle, and a ring.

In some embodiments, the material of the heat dissipation component 500 may be any one of a phase change material, a thermally conductive adhesive, and a thermally conductive graphite sheet, or a combination of two or more thereof, where the phase change material may be a packaged phase change material.

Furthermore, when the material of the heat dissipation component 500 is a phase change material or a thermally conductive graphite sheet, a shape of a projection of the heat dissipation component 500 onto the outer wall 210 corresponding to the opening region 400 is one or more shape selected from a square, a circle, and a ring.

Next, specific embodiments of the battery cell pack of the present application are provided, and the present application is described in more detail through the specific embodiments. It can be seen from the following embodiments that in actual implementation, when the battery cell pack satisfies the relationship of the present application, the heat dissipation effect of the battery cell pack is in an optional state.

Example 1: a frame 100 of a battery cell pack includes two end plates 130 arranged opposite to each other along a Y direction, two side plates 120 arranged opposite to each other along an X direction, and a liquid cooling plate 110 arranged at the bottom of the battery cell 200. An accommodation space is enclosed by the end plates 130, the side plates 120 and the liquid cooling plate 110, and a plurality of battery cells 200 are arranged in the accommodation space with their large surfaces facing each other along the Y direction. The battery cell 200 is a square lithium iron phosphate battery cell (in other implementations, a ternary battery cell, a sodium ion battery cell, and a solid-state or semi-solid-state battery cell types may also be used). An outer wall 210 of each battery cell 200 is wrapped with an insulating film 300, and the insulating film 300 adopts a polypropylene insulating film (in other implementations, a polyethylene terephthalate material may also be used). An opening region 400 is opened on the insulating film 300 at a portion opposite to any outer wall 210 of the battery cell 200. The opening region 400 is square, in which a square heat dissipation component 500 is provided. The heat dissipation component 500 adopts a thermally conductive graphite sheet (in other implementations, boron nitride or a ceramic sheet may also be used), which is directly attached to the opening region 400.

An area of the opening region 400 is $S$ mm$^2$, a thickness of the insulating film 300 is $H$ mm, a volume of the battery cell 200 is $V$ mm$^3$, and in the battery cell pack of Example 1, $S \times H/V = 0.2$.

A maximum temperature of the battery cell pack of the present embodiment measured under a cooling condition is 44.1°C. Specifically, the maximum temperature can be obtained by the following method: driving, by a battery cell pack with a power level of 80% to 100%, a motor to rotate for 3 hours; recording, by a BMS system of the battery cell pack, temperatures inside the battery cell pack in real time during said 3 hours, feeding the temperatures back to a display device to form a temperature curve, and identifying and displaying, by the display device, a maximum temperature of the battery cell pack within said 3 hours.

Examples 2 to 30: the test conditions are substantially the same as those of Example 1, except that the area $S$ mm$^2$ of the opening region 400, the thickness $H$ mm of the insulating film 300, the volume $V$ mm$^3$ of the battery cell 200, and the volume $V_1$ mm$^3$ of the heat dissipation component 500 are adjusted respectively. The test data are shown in the table below.

The test conditions of Comparative Examples 1 and 2 are substantially the same as those of Example 1, except that the values of $S \times H/V$ in Comparative Examples 1 and 2 are 0.00009 and 0.55, respectively, and the maximum temperatures of the battery cell packs in Comparative Examples 1 and 2 measured under the cooling condition are 65°C and 43°C, respectively.

Examples 1 to 30, Comparative Example 1 and Comparative Example 2 are listed as follows.

| Serial number | S (mm$^2$) | H (mm) | V (mm$^3$) | H$_1$ (mm) | V$_1$ (mm$^3$) | S×H/V | V$_1$/SxH | Maximum temperature (°C) | Insulation test |
|---|---|---|---|---|---|---|---|---|---|
| Example 1 | 183000 | 0.12 | 110000 | 0.5 | 21960 | 0.2 | 1 | 44.1 | Pass |
| Example 2 | 183000 | 0.12 | 110000 | 0.5 | 23500 | 0.2 | 1.1 | 43.8 | Pass |
| Example 3 | 183000 | 0.12 | 110000 | 0.5 | 20000 | 0.2 | 0.9 | 44.5 | Pass |
| Example 4 | 9200 | 0.06 | 550000 | 0.5 | 552 | 0.001 | 1 | 52.2 | Pass |
| Example 5 | 9200 | 0.06 | 550000 | 0.5 | 650 | 0.001 | 1.2 | 51.9 | Pass |
| Example 6 | 9200 | 0.06 | 550000 | 0.5 | 360 | 0.001 | 0.7 | 52.9 | Pass |
| Example 7 | 7900 | 0.07 | 5550000 | 0.5 | 553 | 0.0001 | 1 | 54.6 | Pass |
| Example 8 | 7900 | 0.07 | 5550000 | 0.5 | 630 | 0.0001 | 1.1 | 54.1 | Pass |
| Example 9 | 7900 | 0.07 | 5550000 | 0.5 | 200 | 0.0001 | 0.4 | 55 | Pass |

(continued)

| Serial number | S (mm²) | H (mm) | V (mm³) | H₁ (mm) | V₁ (mm³) | S×H/V | V₁/SxH | Maximum temperature (°C) | Insulation test |
|---|---|---|---|---|---|---|---|---|---|
| Example 10 | 7500 | 0.08 | 1200000 | 0.5 | 600 | 0.0005 | 1 | 53.6 | Pass |
| Example 11 | 7500 | 0.08 | 1200000 | 0.5 | 700 | 0.0005 | 1.2 | 53 | Pass |
| Example 12 | 7500 | 0.08 | 1200000 | 0.5 | 450 | 0.0005 | 0.75 | 53.9 | Pass |
| Example 13 | 15625 | 0.08 | 250000 | 0.5 | 1250 | 0.005 | 1 | 51.3 | Pass |
| Example 14 | 15625 | 0.08 | 250000 | 0.5 | 1480 | 0.005 | 1.2 | 50.9 | Pass |
| Example 15 | 15625 | 0.08 | 250000 | 0.5 | 1000 | 0.005 | 0.8 | 51.7 | Pass |
| Example 16 | 50000 | 0.09 | 450000 | 0.5 | 4500 | 0.01 | 1 | 50 | Pass |
| Example 17 | 50000 | 0.09 | 450000 | 0.5 | 5120 | 0.01 | 1.1 | 49.6 | Pass |
| Example 18 | 50000 | 0.09 | 450000 | 0.5 | 4270 | 0.01 | 0.9 | 50.4 | Pass |
| Example 19 | 250000 | 0.1 | 500000 | 0.5 | 25000 | 0.05 | 1 | 48.2 | Pass |
| Example 20 | 250000 | 0.1 | 500000 | 0.5 | 27000 | 0.05 | 1.1 | 47.8 | Pass |
| Example 21 | 250000 | 0.1 | 500000 | 0.5 | 23000 | 0.05 | 0.9 | 48.7 | Pass |
| Example 22 | 227000 | 0.11 | 250000 | 0.5 | 24970 | 0.1 | 1 | 45.2 | Pass |
| Example 23 | 227000 | 0.11 | 250000 | 0.5 | 26500 | 0.1 | 1.2 | 44.6 | Pass |
| Example 24 | 227000 | 0.11 | 250000 | 0.5 | 23200 | 0.1 | 0.9 | 45.6 | Pass |
| Example 25 | 500000 | 0.09 | 150000 | 0.5 | 45000 | 0.3 | 1 | 43.3 | Pass |
| Example 26 | 500000 | 0.09 | 150000 | 0.5 | 47300 | 0.3 | 1.1 | 43 | Pass |
| Example 27 | 500000 | 0.09 | 150000 | 0.5 | 42400 | 0.3 | 0.9 | 43.6 | Pass |
| Example 28 | 458000 | 0.12 | 110000 | 0.5 | 54960 | 0.5 | 1 | 42.9 | Pass |
| Example 29 | 458000 | 0.12 | 110000 | 0.5 | 58700 | 0.5 | 1.1 | 42.8 | Pass |
| Example 30 | 458000 | 0.12 | 110000 | 0.5 | 51870 | 0.5 | 0.9 | 43 | Pass |
| Example 31 | 458000 | 0.12 | 110000 | 0.12 | 51870 | 0.5 | 0.9 | 42.2 | Pass |
| Example 32 | 458000 | 0.12 | 110000 | 0.2 | 51870 | 0.5 | 0.9 | 42.5 | Pass |
| Comparative Example 1 | 165 | 0.06 | 110000 | 0.5 | 10 | 0.00009 | 1 | 65 | Pass |
| Comparative Example 2 | 505000 | 0.12 | 110000 | 0.5 | 60600 | 0.55 | 1 | 43 | Fail |

In the insulation test, a packaged battery cell pack sample is tested using an insulation withstand voltage tester. When a displayed insulation resistance is not less than 10 megohms, the pass of the insulation performance is recorded, which indicates that the insulation performance is stable; when the displayed insulation resistance is less than 10 megohms, the failure of the insulation performance is recorded, which indicates that the insulation risk is high.

It can be seen from the above Examples and Comparative Examples that under the condition of $0.0001 \leq S \times H/V \leq 0.5$, a temperature of the battery cell pack can be well controlled, and when $S \times H/V < 0.0001$, the temperature control effect of the battery cell pack is significantly degraded. In addition, when $S \times H/V > 0.5$, the change of temperature of the battery cell pack under control is not significantly improved compared with that under the control conditions of the present application, but the risk of insulation failure is increased. Therefore, the present application controls $S \times H/V$ to 0.0001 to 0.5, so that a balance between heat dissipation and insulation effects is ensured. In order to further balance the heat dissipation and insulation effects, $0.001 \leq S \times H/V \leq 0.2$ is optional.

Furthermore, it can be known from the above table that when $V_1 /(S \times H) \geq 1$, the maximum temperature of the battery cell pack is relatively better controlled, that is, the heat dissipation effect is better.

Correspondingly, an embodiment of the present application provides an electrical device, which may be various types of devices such as new energy vehicles, computers, energy storage power supply devices, etc. It can be understood that the electrical device may include all the technical features and beneficial effects of the above-mentioned battery cell pack, which will not be repeated here.

In the above embodiments, the description of each embodiment has its own emphasis. For parts that are not described in detail in a certain embodiment, reference can be made to the relevant descriptions of other embodiments.

The battery cell pack and electrical device provided in the embodiments of the present application are introduced in detail above, and the principles and implementation methods of the present application are explained by using specific examples. The description of the above embodiments is only used to help understand the technical solution and core idea of the present application. Those skilled in the art should understand that: the technical solutions recorded in the aforementioned embodiments can still be modified, or, some of the technical features therein may be substituted with equivalents; and these modifications or substitution do not make the essence of the corresponding technical solution deviate from the scope of the technical solution of the embodiments of the present application.

**Claims**

1. A battery cell pack, comprising:

   a frame having a plurality of inner walls, wherein the plurality of inner walls enclose an accommodation space;
   a battery cell disposed within the accommodation space, wherein the battery cell has a plurality of outer walls;
   an insulating film wrapping the plurality of outer walls, wherein the insulating film is provided with an opening region opposite to the outer wall, the opening region being configured to expose at least a portion of the outer wall from the insulating film; and
   a heat dissipation component, at least a portion of which is disposed within the opening region and located between the outer wall and the inner wall;
   wherein an area of the opening region is $S$ mm$^2$, a thickness of the insulating film is $H$ mm, a volume of the battery cell is $V$ mm$^3$, and the battery cell pack satisfies the following relationship:

   $$0.0001 \leq S \times H / V \leq 0.5.$$

2. The battery cell pack according to claim 1, wherein the battery cell pack satisfies the following relationship:

   $$0.001 \leq S \times H / V \leq 0.2.$$

3. The battery cell pack according to claim 1, wherein the heat dissipation component is in contact with the inner wall, a volume of the heat dissipation component is $V_1$ mm$^3$, and the battery cell pack satisfies the following relationship:

   $$V_1 / (S \times H) \geq 1.$$

4. The battery cell pack according to claim 1, wherein the outer wall is rectangular, a length of the outer wall is $L$ mm, a maximum dimension of the opening region along a length direction of the outer wall opposite to the opening region is $L_1$ mm, and the battery cell pack satisfies the following relationship:

   $$0.01 \leq L_1 / L < 1.$$

5. The battery cell pack according to claim 1, wherein the outer wall is rectangular, a width of the outer wall is $M$ mm, a maximum dimension of the opening region along a width direction of the outer wall opposite to the opening region is $M_1$ mm, and the battery cell pack satisfies the following relationship:

   $$0.01 \leq M_1 / M < 1.$$

6. The battery cell pack according to claim 4, wherein the battery cell pack satisfies the following relationship:

   $$L_1 / L \geq 0.5.$$

7. The battery cell pack according to claim 5, wherein the battery cell pack satisfies the following relationship:

$$M_1/M \geq 0.5.$$

8. The battery cell pack according to claim 1, wherein a thickness of the heat dissipation component is $H_1$ mm, and the battery cell pack satisfies the following relationship:

$$H_1/H \geq 1.$$

9. The battery cell pack according to claim 1, wherein:

the plurality of outer walls comprise a top wall, a bottom wall, and a plurality of side walls connected between the top wall and the bottom wall; and
a portion of the insulating film wrapping the bottom wall is provided with the opening region.

10. The battery cell pack according to claim 1, wherein:

the plurality of outer walls comprise a top wall, a bottom wall, and a plurality of side walls connected between the top wall and the bottom wall; and
a portion of the insulating film wrapping the side wall is provided with the opening region.

11. The battery cell pack according to claim 9, wherein:

the insulating film is provided with a plurality of said opening regions;
the plurality of opening regions comprise a first opening region and a second opening region provided on the portion of the insulating film wrapping the bottom wall, each of the first opening region and the second opening region being configured to expose a portion of the bottom wall from the insulating film;
the heat dissipation component comprises a first heat dissipation component and a second heat dissipation component, the first heat dissipation component is disposed within the first opening region, the second heat dissipation component is disposed within the second opening region, and the first heat dissipation component and the second heat dissipation component are disposed between the bottom wall and the inner wall.

12. The battery cell pack according to claim 10, wherein:

the insulating film is provided with a plurality of said opening regions;
the plurality of opening regions comprise a third opening region and a fourth opening region provided on the portion of the insulating film wrapping the side wall, each of the third opening region and the fourth opening region being configured to expose a portion of the side wall from the insulating film;
the heat dissipation component comprises a third heat dissipation component and a fourth heat dissipation component, the third heat dissipation component is disposed within the third opening region, the fourth heat dissipation component is disposed within the fourth opening region, and the third heat dissipation component and the fourth heat dissipation component are disposed between the side wall and the inner wall.

13. The battery cell pack according to claim 9, wherein:

the frame comprises a liquid cooling plate disposed opposite to the bottom wall;
the plurality of inner walls comprises a liquid cooling surface of the liquid cooling plate facing the battery cell; and
the heat dissipation component is connected between the outer wall and the liquid cooling surface.

14. The battery cell pack according to claim 10, wherein:

the frame comprises a liquid cooling plate disposed opposite to the side wall;
the plurality of inner walls comprises a liquid cooling surface of the liquid cooling plate facing the battery cell; and
the heat dissipation component is connected between the outer wall and the liquid cooling surface.

15. The battery cell pack according to claim 10, wherein:

the plurality of side walls comprises a first side wall and a second side wall disposed opposite to each other; and
a portion of the insulating film wrapping the first side wall and a portion of the insulating film wrapping the second side wall are provided with the opening region respectively.

16. The battery cell pack according to any one of claims 1 to 15, wherein a material of the heat dissipation component is one or more of a phase change material, a thermally conductive adhesive, and a thermally conductive graphite sheet.

17. An electrical device, comprising the battery cell pack according to any one of claims 1 to 16.

FIG. 1

FIG. 2

FIG. 3

FIG. 4

FIG. 5

FIG. 6

FIG. 7

FIG. 8

## INTERNATIONAL SEARCH REPORT

International application No.

**PCT/CN2023/140514**

### A.   CLASSIFICATION OF SUBJECT MATTER

H01M10/613(2014.01)i;  H01M10/647(2014.01)i;  H01M10/653(2014.01)i

According to International Patent Classification (IPC) or to both national classification and IPC

### B.   FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; ENTXT; ENTXTC; CNKI: 电池, 绝缘膜, 散热, 冷却, 液冷, 水冷, 开口, 露出, battery, insulat+, film, heat, dissipation, cool+, liquid, water, opening, exposi+

### C.   DOCUMENTS CONSIDERED TO BE RELEVANT

| Category* | Citation of document, with indication, where appropriate, of the relevant passages | Relevant to claim No. |
|---|---|---|
| PX | CN 116666823 A (SUNWODA EVB CO., LTD.) 29 August 2023 (2023-08-29) claims 1-12 | 1-17 |
| X | CN 217035868 U (BEIJING CHJ AUTOMOTIVE TECHNOLOGY CO., LTD.) 22 July 2022 (2022-07-22) description, paragraphs 5-71, and figures 1-3 | 1-8, 10, 14-17 |
| Y | CN 217035868 U (BEIJING CHJ AUTOMOTIVE TECHNOLOGY CO., LTD.) 22 July 2022 (2022-07-22) description, paragraphs 5-71, and figures 1-3 | 9, 11-13 |
| Y | CN 114765288 A (AUDI AG) 19 July 2022 (2022-07-19) description, paragraphs 5-41, and figures 1-3 | 9, 11-13 |
| Y | CN 111384314 A (CONTEMPORARY AMPEREX TECHNOLOGY CO., LTD.) 07 July 2020 (2020-07-07) description, paragraphs 31-72, and figures 1-3 | 9, 11-13 |
| Y | CN 209104235 U (CONTEMPORARY AMPEREX TECHNOLOGY CO., LTD.) 12 July 2019 (2019-07-12) description, paragraphs 15-42, and figures 1-5 | 9, 11-13 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 March 2024** | **29 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/140514** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 216958200 U (GREE ALTAIRNANO NEW ENERGY, INC.) 12 July 2022 (2022-07-12)<br>entire document | 1-17 |
| A | CN 219040681 U (CALB CO., LTD.) 16 May 2023 (2023-05-16)<br>entire document | 1-17 |

Form PCT/ISA/210 (second sheet) (July 2022)

## INTERNATIONAL SEARCH REPORT
### Information on patent family members

International application No.

**PCT/CN2023/140514**

| Patent document cited in search report | | | Publication date (day/month/year) | Patent family member(s) | | | Publication date (day/month/year) |
|---|---|---|---|---|---|---|---|
| CN | 116666823 | A | 29 August 2023 | None | | | |
| CN | 217035868 | U | 22 July 2022 | None | | | |
| CN | 114765288 | A | 19 July 2022 | None | | | |
| CN | 111384314 | A | 07 July 2020 | US | 2020212392 | A1 | 02 July 2020 |
| | | | | US | 11283130 | B2 | 22 March 2022 |
| | | | | JP | 2020109743 | A | 16 July 2020 |
| | | | | JP | 6892908 | B2 | 23 June 2021 |
| | | | | EP | 3675217 | A1 | 01 July 2020 |
| | | | | WO | 2020135028 | A1 | 02 July 2020 |
| CN | 209104235 | U | 12 July 2019 | None | | | |
| CN | 216958200 | U | 12 July 2022 | None | | | |
| CN | 219040681 | U | 16 May 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310766571